# EUROPÄISCHE PATENTSCHRIFT

(11) **EP 4 338 148 B1**
(45) Veröffentlichungstag und Bekanntmachung des Hinweises auf die Patenterteilung: **20.08.2025**
(21) Anmeldenummer: 22728537.6
(22) Anmeldetag: 10.05.2022
(51) Int. Cl.: G09B 23/30, G09B 23/28

(54) **SYNTHETISCHES THROMBUSMODELL ZUM ERLERNEN DER OPERATIVEN ENTFERNUNG EINES BLUTGERINNSELS IM RAHMEN EINER BEHANDLUNGSNACHSTELLUNG**
SYNTHETIC THROMBUS MODEL FOR LEARNING THE SURGICAL REMOVAL OF A BLOOD CLOT IN THE CONTEXT OF A TREATMENT READJUSTMENT
MODÈLE DE THROMBUS SYNTHÉTIQUE PERMETTANT L'APPRENTISSAGE DE L'EXTRACTION CHIRURGICALE D'UN CAILLOT SANGUIN DANS LE CONTEXTE D'UN RÉAJUSTEMENT DE TRAITEMENT

(30) Priorität: 12.05.2021 DE 102021112467
(43) Veröffentlichungstag der Anmeldung: 20.03.2024
(73) Patentinhaber: Technische Universität Hamburg, 21073 Hamburg (DE)
(72) Erfinder: WORTMANN, Nadine, 22087 Hamburg (DE); KRAUSE, Dieter, 21244 Buchholz (DE); FIEHLER, Jens, 22391 Hamburg (DE); GUERREIRO, Helena, 22083 Hamburg (DE); KYSELYOVA, Anna, 20251 Hamburg (DE)
(74) Vertreter: Sparing Röhl Henseler
(86) Internationale Anmeldenummer: PCT/EP2022/062649
(87) Internationale Veröffentlichungsnummer: WO 2022/238408

(56) Entgegenhaltungen:
- WO-A1-2017/024258
- FR-A1- 3 086 089

## Beschreibung

Die Erfindung betrifft ein synthetisches Thrombusmodell zum Erlernen der operativen Entfernung eines Blutgerinnsels im Rahmen einer Behandlungsnachstellung. Dazu wird in einem Trainingsmodell ein relevanter Gefäßbaum des Menschen mit einem Blutkreislaufersatzsystem abgebildet und das Training von Schlaganfallszenarien unter Verwendung eines Phantoms eines Blutgerinnsels, d.h. eines synthetischen Thrombusmodells aus einem Ersatzmaterial, ermöglicht.

Der ischämische Schlaganfall ist einer der Hauptfaktoren, die zu Behinderung und Tod weltweit führen. Der häufigste Grund für einen akuten Schlaganfall ist ein Verschluss einer Gehirnarterie, der zum Sauerstoffmangel einer Hirnregion und so zum Hirninfarkt führt. Die Therapie der ersten Wahl derartiger akuter Gefäßverschlüsse ist die Wiedereröffnung über eine katheterbasierte Behandlung, die sogenannte Thrombektomie. Künstliche Arzneimittel mit gerinnungshemmender Wirkung, wie aus DE 28 32 536 C2 bekannt, die die Bildung von Thromben verhindern sollen und dazu als Trägermaterial beispielsweise Agarose angeben, helfen in diesen medizinischen Notfallsituationen nicht.

Die Thrombektomie stellt eine minimalinvasive Behandlung dar, die bei Schlaganfällen zum Einsatz kommt. Hierbei wird mittels eines Stent-Retrievers das hirnverschließende Blutgerinnsel (Thrombus) mechanisch entfernt. Dies erfolgt im Behandlungsfall unter hohem Zeitdruck mit dem Ziel der möglichst schnellen Wiedereröffnung des betroffenen Gefäßes und wird durch patientenspezifische Variablen wie Gefäßkurven und -engstellen zu einer Herausforderung für den behandelnden Arzt. Daher ist ein kontinuierliches Training und sicheres Beherrschen der Thrombektomietechniken für den Arzt unabdingbar.

Ein gängiges Trainingsmodell für die Thrombektomie ist das Tiermodell am Schwein. Das Training wird an lebendigen Schweinen, die für diese Zwecke aufbereitet und narkotisiert werden, durchgeführt. Dabei wird dem Schwein das eigene Blut entnommen, in einem Prozess geronnen und dann erneut injiziert, um Schlaganfälle auszulösen. Dabei wird das Schwein üblicherweise nach mehreren Trainingsprozeduren eingeschläfert.

Tierversuche für Ausbildungs- und Weiterbildungszwecke in der Schlaganfallbehandlung gilt es zu reduzieren oder vollständig aufzugeben, wozu dann allerdings ein tierblutfreies Ersatzmaterial für Thromben bereitzustellen ist. Bekannt ist beispielsweise der Einsatz eines synthetischen Thrombus aus Polyurethan. Solche synthetischen Simulationsmodelle leiden allerdings an dem Mangel, dass die Diversität menschlicher Thromben nicht abgebildet werden kann.

Je nach Entstehungsart weisen Thromben nämlich unterschiedliche Zusammensetzungen ihrer wesentlichen Bestandteile an Erythrozyten, Fibrin und Kalzium auf. Ein Thrombus ist eine feste Masse, die durch eine körpereigene Gerinnungskaskade aufgrund einer Verletzung eines Blutgefäßes oder durch eine deutliche Reduzierung des Blutflusses entsteht. Ein unterschiedlicher Anteil an Erythrozyten, Fibrin und Kalzium führt zu unterschiedlichen physikalischen Eigenschaften dieser Thromben, was zu unterschiedlichem Verhalten in Härte und Fragmentierung sowie Elastizität führt. Sogenannte rote Thromben weisen mehr Erythrozyten auf und unterscheiden sich damit auch optisch von weißen Thromben, die mehr Fibrin und Kalzium enthalten. Zwischen diesen Thrombusarten liegt eine hohe Diversität an gemischten Thrombusarten und ihrer Hauptbestandteile. Die Bandbreite menschlicher Thromben ist somit hoch, so dass diese unterschiedliche Eigenschaften besitzen, was sich in verschiedenem Verhalten während der Behandlung äußert. Die mechanischen Eigenschaften von Thromben ähneln viskoelastischen Polymeren. Die üblichen Abmessungen der Thromben liegen bei einer Länge von 6 bis 15 mm und einem Durchmesser von 1 bis 3 mm.

Als weiterer Thrombusersatz ist bekannt ein solcher aus nicht-biologischen Bestandteilen, nämlich Wasser, Guaran, Glycerin, Talkumpuder und Borax. Borax gehört als fortpflanzungsgefährdend zu einer Gefahrenstoffkategorie. Zudem ist nicht bekannt, ob verschiedene Thrombusarten herstellbar sind. Die Vielfalt an verschiedenen Thrombusarten wird folglich nicht berücksichtigt.

Aufgabe der Erfindung ist es daher, ein tierbestandteilfreies Thrombusmodell für eine Trainingsumgebung für endovaskuläre Schlaganfallbehandlungen unter standardisierten Bedingungen zu schaffen, wobei vorzugsweise mit unterschiedlichen Schwierigkeitsgraden ein Training der Thrombektomie unter realen Bedingungen in einem Trainingsmodell, insbesondere neurointerventionellen Trainingsmodell, ermöglicht wird.

Ein synthetisches Thrombusmodell gemäß den Merkmalen des Oberbegriffs des Anspruchs 1 ist bekannt aus FR 3 086 089 A1. Danach wird ein künstlicher Thrombus aus einer Rezeptur von Agar-Agar und Gummi hergestellt. Der Zweck dieses Rezepts ist die Simulation der verschiedenen Arten von Thromben.

Diese Aufgabe wird durch die Merkmale des Anspruchs 1 gelöst.

Hierdurch wird ein synthetisch hergestelltes Thrombusmodell geschaffen, das in seinen Eigenschaften variierbar ist, um im Trainingsmodell das Verhalten einer Vielzahl unterschiedlicher, realer Thromben im Menschen nachbilden zu können. Zudem sind diese tierbestandteilfrei.

Verschiedene Thrombusmodelle können für das Training bereitgestellt werden, so dass unterschiedliche Trainingsszenarien abgebildet werden können. Die verschiedenen in der Realität auftretenden menschlichen Thromben, insbesondere hinsichtlich realer Gestalt, können zumindest mit einer gewissen Diversität abgebildet werden. Mit Hilfe von Materialeigenschaften, strukturellen Eigenschaften und Kombinationen lassen sich Eigenschaften wie Härte, Elastizität, die Fragmentierungseigenschaften sowie gegebenenfalls die Adhäsion an einem Gefäßmodell beeinflussen und somit eine große Bandbreite an verschiedenen Thrombusmodellen für Trainingszwecke erzielen. Insbesondere die Kombination mit additiv gefertigten Strukturen und damit die Einstellung der Thrombuseigenschaften über die Struktur ergibt vorteilhafte Gestaltungen, die das Nachstellen realer Formen und Abmessungen erlauben.

Erfindungsgemäß ist als Material ein Hauptmaterial der Shore-Härte A im Bereich von 0 bis 10 vorgesehen, insbesondere ist Agarose oder Silikonkautschuk (Silikone im vernetzten Zustand) vorgesehen, um Thromben insbesondere in beispielsweise einem neurointerventionellen Trainingsmodell abzubilden. Der Werkstoffvergleich der genannten Shore-Härte liegt zwischen der Festigkeit von Gelatine (Shore A 0) und Gummibärchen (Shore A 10).

Agarose zeichnet sich durch eine hohe Fragmentierung im Kontakt mit einem Behandlungsinstrument aus, während Silikonkautschuk sehr kompakte Thromben bildet. Die Eigenschaften der Thrombusmodelle auf Silikonkautschuk- oder Agarosebasis können sich im Herstellungsprozess zu einer Vielfalt an realistischen Thromben optimieren lassen, indem eine Materialkombination vorgenommen und variierbar ist durch eine Zugabe von 5 bis 40 Gew.-% eines Klebers und/oder eines Verstärkungsmaterials zur Ausbildung einer Verbundstruktur. Dazu wird die Silikonkautschuk- oder Agarosebasis als Ausgangsmaterial zunächst gewogen und darauf basierend Gew.% an Kleber und/oder übrigen Komponenten zugegeben. Durch den Klebstoff kann eine Erhöhung der Elastizität erreicht werden. Das Verstärkungsmaterial, beispielsweise additiv gefertigte Stützstrukturen und/oder Mikroglasperlen, können zur Stabilisierung stark fragmentierender Agarosethromben dienen und/oder zur Erhöhung der Fragmentierung von Thrombusmodellen auf Silikonkautschukbasis eingesetzt werden.

Über die Form, in der das Thrombusmodell hergestellt werden kann, kann ebenfalls Einfluss auf die genannten Eigenschaften genommen werden. So unterscheiden sich die Eigenschaften von in einer Gussform hergestellten Modellen zu denen, die in einer Spritze ausgehärtet und durch diese bereitgestellt werden durch ein Führen durch den Spritzenkonus. Auch über eine Lagerung können die genannten Eigenschaften gezielt beeinflusst werden, indem bei Silikonthromben die adhäsiven Eigenschaften durch Lagern beispielsweise in pflanzlichem Speiseöl herabgesetzt werden kann.

Als Kleber bevorzugt ist der Klebstoff Chlormethylisothiazolinon (CMIT) und/oder eine Mischung mit Methylisothiazolinon (MIT).

Der Aufbau des medizinischen Trainingsmodells mit synthetischen Thrombusmodellen kann modular gestaltet sein und kann bestehen aus standardisierten Komponenten (in jedem Trainingsszenario genutzt), varianten Komponenten (Trainingsszenario-prägende Komponenten) und patientenspezifische Komponenten (entsprechend einer originalen patientenspezifischen Anatomie angepasst).

Die vorteilhafte Anwendung realer Instrumente kann zudem kombiniert werden mit einem Nachstellen von physiologischen Eigenschaften, wie Temperatur, Blutfluss und Pulsation. Die hohe Geometriefreiheit additiver oder generativer Fertigungsverfahren ermöglicht dabei die Fertigung von Gefäßmodellen, die eine exakte dreidimensionale Nachbildung von patientenindividuellen Gefäßinnenräumen sind. Zum Trainieren einer mechanischen Thrombektomie kann folglich ein Mikrokatheter in ein Gefäßsystem eines Trainingsmodells eingebracht und über einen Führungsdraht ein korbähnliches Geflecht - ein sogenannter Stent-Retriever - zu einem mit einem synthetischen Thrombusmodell verschlossenen Gefäß vorgeschoben werden. Der Stent-Retriever wird in Position gebracht, fängt das Thrombusmodell ein und wird dann zurückgezogen. Mit dieser mechanischen Entfernung wird der Blutfluss wiederhergestellt.

Das erfindungsgemäße synthetische Thrombusmodell liefert somit folgende Vorteile: Die Entwicklung eines In-Vitro Simulationsmodells von Thrombektomie-Behandlungen zur Vermeidung von Tierversuchen ist möglich. Eine Trainingsumgebung für endovaskuläre Schlaganfallbehandlungen unter standardisierten Bedingungen mit unterschiedlichen Schwierigkeitsgraden unter realen Bedingungen wird geschaffen. Die Diversität der auftretenden Thromben ist nachbildbar. Durch Materialeigenschaften, Zusätze oder Struktur können einstellbare Eigenschaften abgebildet werden. Strukturen können aus additiver Fertigung gewonnen werden. Durch die Zugabe von Klebstoff Chlormethylisothiazolinon und/oder Methylisothiazolinon (CMIT + MIT) wird ein Bindemittel generiert. Die Zugabe von Mikroglasperlen ermöglicht eine Erhöhung der Fragmentierung. Unterschiedliche Herstellungsverfahren und Lagerungen sind einsetzbar. Das Produkt ist nicht toxisch.

Weitere Ausgestaltungen und Vorteile der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt eine schematische Darstellung eines medizinischen Trainingsmodells zur Simulation verschiedener Schlaganfallszenarien unter Einsatz der Thrombektomie, wobei in ein Hirngefäß ein Thrombusmodell platziert ist.
Fig. 2 zeigt eine Übersicht der verschiedenen Parameter zur Einstellung der Eigenschaften der erfindungsgemäßen Thrombusmodelle, wie insbesondere Härte, Fragmentierung, Elastizität und Klebrigkeit, sowie ihre Richtung.
Fig. 3 zeigt verschiedene Formen von Verstärkungsmaterialien als Zusätze.

Die Erfindung betrifft ein synthetisches Thrombusmodell zum Erlernen der operativen Entfernung eines Blutgerinnsels aus einem Blutgefäß unter Einsatz der mechanischen Thrombektomie bei einer Simulation verschiedener Schlaganfallszenarien in einem Trainingsmodell. Das Thrombusmodell bildet eine naturgetreue Gestalt mit einer realistischen Haptik eines menschlichen Blutgerinnsels dadurch nach, dass ein langstreckiger Grundkörper auf Basis eines elastisch verformbaren Hauptmaterials mit einer Shore-Härte A im Bereich von 0 bis 10, insbesondere 0 bis 4, vorgesehen ist, dessen Eigenschaftsprofil hinsichtlich mindestens der Härte und Fragmentierung durch Vorsehen einer Materialkombination des Hauptmaterials/Ausgangsmaterials mit mindestens einer Zugabe an einem Kleber mit 5 bis 40 Gew.-% und/oder mit einem Verstärkungsmaterial variierbar ist.

Das elastisch verformbare Hauptmaterial ist gebildet von einer ausgehärteten Agarosegel-Basis oder Silikonkautschuk-Basis. Die Agarosegel-Basis ist vorzugsweise aus einem 2% bis 15% Agarose-Gel hergestellt. Der Kleber enthält ein Chlormethylisothiazolinon und/oder eine Mischung mit Methylisothiazolinon.

Das Verstärkungsmaterial ist als eine Stützstruktur ausgebildet, wobei die Stützstruktur/Verstärkungsstruktur als eine Spiralstruktur, Wellenstruktur oder stachelartige Struktur ausgebildet sein kann. Durch die additive Fertigung kann problemlos weiter differenziert und kombiniert werden. Eine Anzahl Stützstrukturelemente können dabei beabstandet und vereinzelt zueinander mit einer Orientierung eingearbeitet sein in den Grundkörper, derart, dass deren Längsrichtung einer Längsrichtung des Thrombusmodells folgt.

Die Stützstruktur kann Mikroglasperlen umfassen. Vorzugsweise nimmt die Stützstruktur dabei einen Zugabeanteil von 10 bis 40 Gew.-% ein.

Der langstreckige Grundkörper kann durch eine zeitweilige Lagerung in einem pflanzlichen Speiseöl eine verminderte Oberflächenenergie aufweisen, was die Oberflächenadhäsion reduziert. Die Formgebung des Grundkörpers kann nach einem Gussverfahren oder einem Spritzverfahren erfolgen.

Erfindungsgemäß vorgesehen ist ferner die Verwendung des synthetischen Thrombusmodells in einem Trainingsmodell im Rahmen einer katheterbasierten Behandlungsnachstellung von Schlaganfallszenarien.

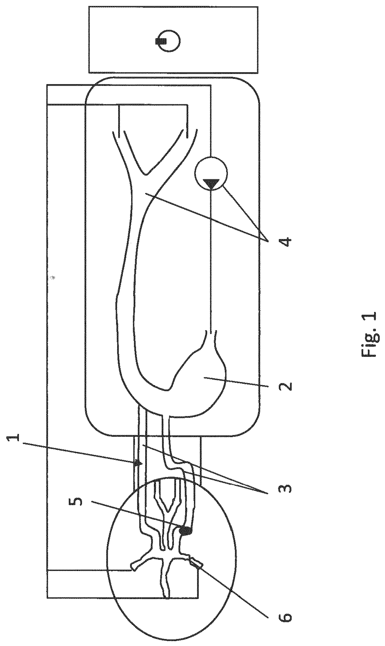

Wie Fig. 1 zeigt, umfasst ein solches Trainingsmodell mindestens einen relevanten Gefäßbaum 1 mit einem Blutkreislaufersatzsystem 2, das mindestens eine Übungsregion 3 aufweist und an ein anatomisch nachgebildetes Blutkreislaufersatzsystem 2 mit einem Fördersystem 4 anschließbar ist. Zum Trainieren einer mechanischen Thrombektomie mit Stent-Retrievern zum Einfangen und Entfernen eines synthetischen Thrombusmodells 5 ist ein solcher auch vor einer Stenose 6 plazierbar. Das Blutkreislaufersatzsystem 2 kann zur Simulation eines menschlichen Blutkreislaufsystems hinsichtlich Temperatur und Druck des Fluids ausgebildet sein.

Ein vorzugsweise modularer Grundaufbau des Trainingsmodells ermöglicht die Kombination von Modulen, und zwar standardisierten oder varianten Modulen mit austauschbaren individualisierten Modulen. Ein Hauptaugenmerk liegt auf der Integration von patientenspezifischen und individualisierten Geometrien. Patientenspezifische Aneurysmamodelle oder sonstige Übungsfelder 3, 6 können beispielsweise auf Grundlage von medizinischen Bilddaten von Patienten in einem standardisierten Individualisierungsprozess additiv, d.h. im Schichtbauverfahren bzw. 3D-Druck, gefertigt werden. Ein Portfolio unterschiedlichster Aneurysmageometrien oder Stenosen 6 können als Trainingsgrundlage bereitgestellt werden.

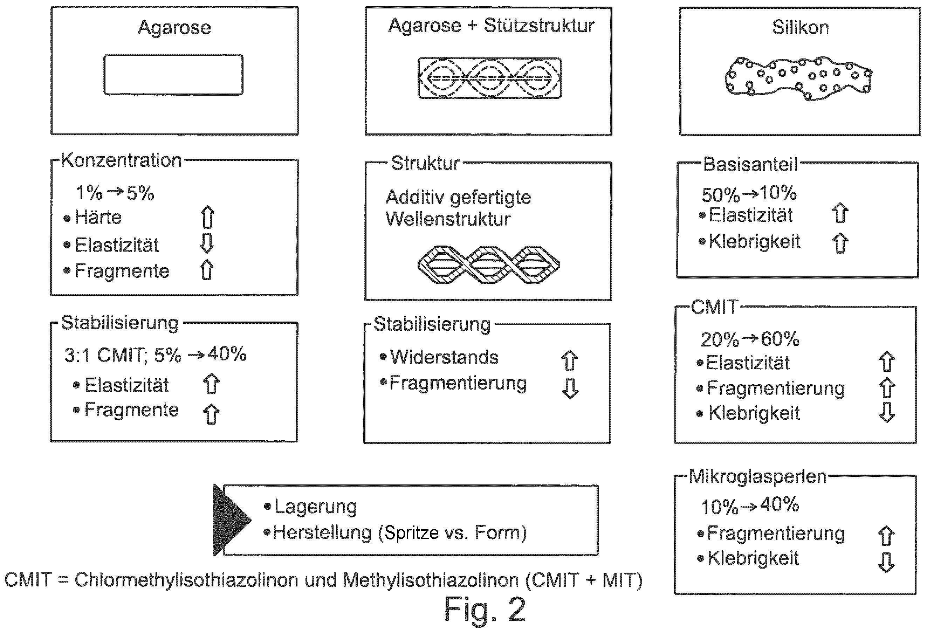

Fig. 2 beschreibt die Ausbildung von Agarose-Thromben. Die Agarose wird beispielsweise in 2, 5 und 10 Gew.-% hergestellt. Die Agarose kann in einem Lösungsmittel auf über 95°C erhitzt und mit Lebensmittelfarbe im Verhältnis 0,1 g zu 25 g gefärbt werden. Das Gemisch kann für 2 Stunden gekühlt werden. Die Herstellung kann auf zwei unterschiedliche Weisen erfolgen. Die Aushärtung kann zum einen in einem Silikonschlauch, mit beispielsweise einem Innendurchmesser von 3 mm, zum anderen in Form eines Blocks, aus dem die Thromben ausgestanzt werden, erfolgen. Vor einem Gelierprozess der Agarose, bei beispielsweise 34-38°C, lassen sich weitere Zusatzstoffe beimischen. Dies wird genutzt, um der Agarose stabilisierende Komponenten beizumischen. Als stabilisierende Komponente wird der Agarose Kleber hinzugefügt. Dieser besteht beispielsweise aus einer 3:1 Mischung Chlormethylisothiazolinon (CMIT) und Methylisothiazolinon (MIT). Dieser Zusatz trägt dazu bei, die Fragmentierung der Agarose zu reduzieren, ohne die Elastizität zu reduzieren. Hierzu können 1, 2 und 5 %ige Agarosemischungen hergestellt werden, denen wiederum 5, 20 oder 40 Gew.-% CMIT + MIT zugesetzt werden. Besonders bevorzugt sind Agarosethromben mit 2% Konzentration und 5 - 20 Gew.-% CMIT + MIT.

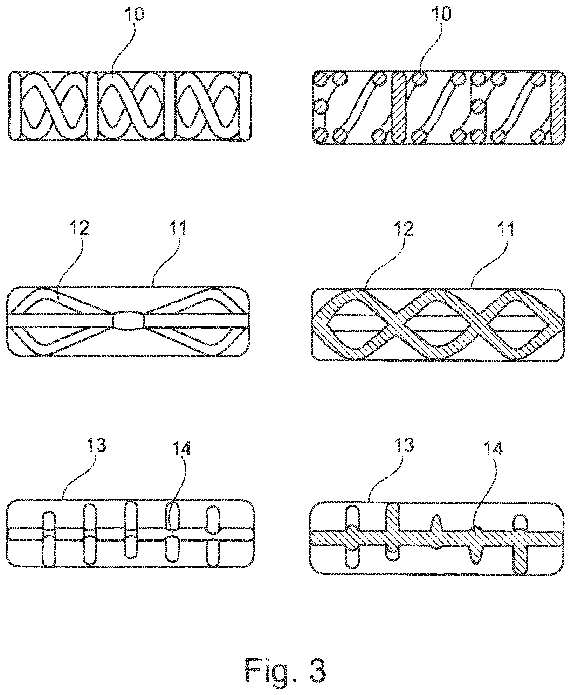

Zur Stabilisierung von stark fragmentierenden Agarosethromben können beispielsweise drei verschiedene Strukturen als Verstärkungsmaterial vorgesehen sein. Die Strukturen werden mittels additiver Fertigung hergestellt. Die Strukturen können in eine Gussform gelegt und mit der flüssigen Agarose umgossen werden. Fig. 3 zeigt die beispielsweise genannten drei verschiedenen Strukturen. Danach ist eine erste Struktur 10 beispielsweise eine Spiralstruktur. Diese Spiralstruktur weist vorzugsweise zwei symmetrische Spiralen auf, die um 180° versetzt sind und durch zusätzlich vier Ringe mit Querverbindungen miteinander verbunden sind. Der Durchmesser der Schnittfläche kann im Bereich von 0,5 mm liegen. Durch die Querverbindung soll eine Stabilisierung des Modells erreicht werden, ohne dass die Elastizität wesentlich beeinflusst wird. Durch die Spiralen und Kreise soll eine Kompression der Agarose in Querrichtung verhindert werden, wobei eine Kompression in Längsrichtung möglich ist. Ein Hohlraum im Modell soll eine Durchstechung des Thrombus mit einem Behandlungsinstrument ermöglichen.

Neben der Struktur aus Spiralen kann eine Wellenstruktur 11 vorgesehen sein. Die Struktur ist aus mehreren, insbesondere drei Wellen und einem durchgängigen Stab aufgebaut. Die Wellen bilden eine Sinuskurve von beispielsweise 1,5 Pi. Dadurch ergeben sich drei Kammern 12, die mit Agarose gefüllt werden. Die Struktur ist dahingehend vorteilhaft, dass das Modell gegen Kompression in Längs- und Querrichtung stabil ist, aber eine leichte Biegung sowie eine Perforierbarkeit ermöglicht.

Ein drittes Konzept für die Kombination von Agarose und Stützstruktur basiert auf einer stachelartigen Struktur 13, die einen länglichen Stab mit Stacheln mit einem Durchmesser im Bereich von 0,5 mm umfasst. Für eine zusätzliche Stabilität können die Verbindungsstellen durch Kugeln 14 verstärkt sein. Die Fragmentierung der Agarose kann durch die stachelartige Struktur mittels Aufnahme der Belastungen in Querrichtung reduziert werden. Die Struktur kann so ausgelegt sein, dass eine leichte Biegung sowie eine Perforation des Modells möglich ist.

Agarosethromben mit einer Materialkombination aus Agarose und Stützstruktur wie vorstehend beschrieben, bilden harte, kalziumreiche Thromben ab.

Fig. 2 zeigt ferner Silikonthromben auf Silikonkautschukbasis als synthetische Thrombusmodelle. Silikonmodelle mit einem Basisanteil im Bereich von 10 bis 50 Gew.-% an reinem Silikon der Shore-Härte (ShA) 0 sind formstabil. Besonders vorteilhaft ist ein Basisanteil von 30 bis 40 Gew.-%, da dann die Elastizität hoch ist bei einer mäßigen Klebrigkeit (Adhäsion). Durch eine Zugabe von Kleber im Bereich von 20 bis 60 Gew.-% zeigen die Modelle eine stärkere Verformung, eine vermehrte Fragmentierung unter Kompression sowie Abnahme der Klebrigkeit. Dies gilt insbesondere für den Kleber CMIT als auch für Mischungen von CMIT mit MIT. Besonders vorteilhaft ist eine Zugabe von 30 bis 50 Gew.-% CMIT oder CMIT+MIT. Vorteilhaft ist insoweit die Zunahme der Elastizität. Um zu starke Anhaftungen der Modelle an den künstlichen Gefäßmodellen und damit ein zu unrealistisches Entlangrollen an der Gefäßwand zu reduzieren, kann die Klebrigkeit der Modelle durch eine Lagerung der hergestellten Thrombusmodelle in Sonnenblumenöl reduziert werden, Ferner besteht die Möglichkeit der Zugabe von Mikroglasperlen mit 10 bis 40 Gew.-%. Die Zugabe von Mikroglasperlen reduziert zudem die Klebrigkeit. Besonders bevorzugt ist die Zugabe von 10 bis 20 Gew.-% Mikroglasperlen. Bei mechanischer Belastung zeigen die Modelle mit Mikroglasperlen eine verstärkte Fragmentierung und Verformung. Die so hergestellten Silikonthromben bilden das Verhalten weicher und kompakter Thromben ab, die vorwiegend erst bei deutlicher mechanischer Belastung fragmentieren.

Als Materialkombination für ein weiches und kompaktes Thrombusmodell ist besonders vorteilhaft 30 bis 35 Gew.-% an reinem Silikon ShA 0 als Silkonbasis und Hauptmaterial für einen Grundkörper aus Silikonkautschuk, die Zugabe von Kleber mit 30 bis 40 Gew.-%, insbesondere CMIT oder CMIT + MIT und vorzugsweise eine zeitweilige Lagerung in eine Pflanzenöl. Zur Ausbildung eines Thrombusmodells, der zu einer Fragmentierung neigen soll, ist ferner die Zugabe von Mikroglasperlen mit 10 bis 20 Gew.-% vorteilhaft.

Zur Herstellung eines weichen Silikons mit Shore-Härte A (ShA) von 0 bis 10 wird vorzugsweise ein additiv kalt-vernetzendes Silikonelastomer mit einer Basis und Katalysator, beispielsweise im Verhältnis 1 zu 1, gemischt und die flüssige Silikonmischung über mehrere Stunden ausgehärtet. Die Menge an Katalysator kann danach gewählt werden, um zudem Einfluss zu nehmen auf den Weichheitsgrad des Modells. Der Misch- und Aushärtungsvorgang bietet die Möglichkeit, die Eigenschaften des Silikons zu beeinflussen, indem das Mischungsverhältnis von Basis und Katalysator verändert bzw. weitere Komponenten hinzugegeben werden. So kann die Elastizität und Klebrigkeit des Silikons verändert werden, wenn das Mischungsverhältnis von Basis und Katalysator variiert.

Um die Fragmentierungseigenschaft zu erhöhen, können den Silikonmodellen Mikroglasperlen mit einem Durchmesser von vorzugsweise 0,25 bis 0,5 mm beigefügt werden.

Die Silikonmodelle können in einer Gussform hergestellt werden. Vorzugsweise weisen die so hergestellten Thrombenmodelle beispielsweise einen Durchmesser von 2,5 bis 3,5 mm und eine Länge von 8 bis 15 mm auf. Zum anderen kann die flüssige Silikonmischung zum Aushärten in eine Spritze verbracht werden und von dort nach Aushärten des Silikons aus der Spritze gedrückt werden, wobei die vorstehend genannten Abmessungen gewählt werden.

## Patentansprüche

1. Synthetisches Thrombusmodell (5) zum Erlernen der operativen Entfernung eines Blutgerinnsels aus einem Blutgefäß unter Einsatz der mechanischen Thrombektomie bei einer Simulation verschiedener Schlaganfallszenarien in einem Trainingsmodell, das eine naturgetreue Gestalt mit einer realistischen Haptik eines menschlichen Blutgerinnsels dadurch nachbildet, dass ein langstreckiger Grundkörper auf Basis eines elastisch verformbaren Hauptmaterials mit einer Shore-Härte A im Bereich von 0 bis 10 und einem Zusatzstoff zur Simulation verschiedener Arten von Thromben vorgesehen ist, **dadurch gekennzeichnet, dass** das Eigenschaftsprofil des Grundkörpers mindestens hinsichtlich Härte und Fragmentierung durch Vorsehen einer Materialkombination des Hauptmaterials mit mindestens einer als stabilisierende Komponente hinzugefügten Zugabe an einem Kleber mit 5 bis 40 Gew.-% und/oder mit einem Verstärkungsmaterial aus additiv gefertigten Strukturen mit eingearbeiteter Orientierung variierbar ist zur Ausbildung einer Verbundstruktur.

2. Synthetisches Thrombusmodell (5) nach Anspruch 1, **dadurch gekennzeichnet, dass** das elastisch verformbare Hauptmaterial gebildet ist von einer gelierten Agarose-Basis oder einer Silikonkautschuk-Basis.

3. Synthetisches Thrombusmodell (5) nach Anspruch 2, **dadurch gekennzeichnet, dass** die gelierte Agarose-Basis mit einer 2 %- bis 5 %-Konzentration hergestellt ist.

4. Synthetisches Thrombusmodell (5) nach einem der Ansprüche 1 bis 3, **dadurch gekennzeichnet, dass** der Kleber ein Chlormethylisothiazolinon (CMIT) und/oder eine Mischung mit Methylisothiazolinon (MIT) ist.

5. Synthetisches Thrombusmodell (5) nach Anspruch 4, **dadurch gekennzeichnet, dass** ein Agarosethrombus mit 2 bis 3% Konzentration und 5 - 20 Gew.-% Kleber an CMIT + MIT ausgebildet ist.

6. Synthetisches Thrombusmodell (5) nach Anspruch 4, **dadurch gekennzeichnet, dass** ein Silikonkautschukthrombus mit einem Silikon-Basisanteil von Silikon ShA 0 von 30 bis 35 Gew.-% und mit 30 - 40 Gew.-% Zugabe an Kleber wie CMIT + MIT ausgebildet ist.

7. Synthetisches Thrombusmodell (5) nach Anspruch 5 oder 6, **dadurch gekennzeichnet, dass** das Mischungsverhältnis von CMIT zu MIT bei 3 : 1 liegt.

8. Synthetisches Thrombusmodell (5) nach einem der Ansprüche 1 bis 7, **dadurch gekennzeichnet, dass** das Verstärkungsmaterial als eine Stützstruktur ausgebildet ist.

9. Synthetisches Thrombusmodell (5) nach Anspruch 8, **dadurch gekennzeichnet, dass** die Stützstruktur als eine Spiralstruktur (10), Wellenstruktur (11) oder stachelartige Struktur (13) ausgebildet ist, deren jeweilige Längserstreckung der Längserstreckung des langstreckigen Grundkörpers folgt.

10. Synthetisches Thrombusmodell (5) nach einem der Ansprüche 7 bis 9, **dadurch gekennzeichnet, dass** die Stützstruktur Mikroglasperlen umfasst.

11. Synthetisches Thrombusmodell (5) nach einem der Ansprüche 7 bis 10, **dadurch gekennzeichnet, dass** die Stützstruktur eine Zugabe von 10 bis 40 Gew.-% bildet.

12. Synthetisches Thrombusmodell (5) nach einem der Ansprüche 1 bis 11, **dadurch gekennzeichnet, dass** der langstreckige Grundkörper durch eine zeitweilige Lagerung in einem pflanzlichen Speiseöl ein vermindertes Oberflächenadhäsionsverhalten besitzt.

13. Synthetisches Thrombusmodell (5) nach einem der Ansprüche 1 bis 12, **dadurch gekennzeichnet, dass** die Formgebung nach einem Gussverfahren oder einem Spritzverfahren erfolgt ist.

14. Verwendung des synthetischen Thrombusmodells (5) nach einem der Ansprüche 1 bis 13 in einem Trainingsmodell im Rahmen einer katheterbasierten Behandlungsnachstellung von Schlaganfallszenarien mit mindestens einem relevanten Gefäßbaum (1) mit einem Blutkreislaufersatzsystem (2) mit einem Fördersystem (4), das mindestens eine Übungsregion (3) aufweist und an ein anatomisch nachgebildetes Blutkreislaufersatzsystem (2) anschließbar ist.

15. Verwendung des synthetischen Thrombusmodells (5) nach Anspruch 14, **dadurch gekennzeichnet, dass** eine mechanische Thrombektomie mit Stent-Retrievern zum Einfangen und Entfernen oder zur Aspiration des synthetischen Thrombusmodells vorgesehen ist.

16. Verwendung des synthetischen Thrombusmodels (5) nach Anspruch 14 oder 15, **dadurch gekennzeichnet, dass** das Blutkreislaufersatzsystem (2) mit dem Fördersystem (4) zur Simulation eines menschlichen Blutkreislaufsystems hinsichtlich Temperatur und Druck des Fluids ausgebildet ist.

## Claims

1. Synthetic thrombus model (5) for learning the surgical removal of a blood clot from a blood vessel using mechanical thrombectomy in a simulation of various stroke scenarios in a training model, which simulates a lifelike shape with a realistic feel of a human blood clot thereby that an elongated base body based on an elastically deformable main material with a Shore A hardness in the range of 0 to 10 together with an additive for the simulation of different types of thrombi is provided, **characterized in that**, the property profile of the base body is variable at least with respect to hardness and fragmentation by providing a material combination of the main material and of at least an added amount of a stabilizing component, being an adhesive between 5 and 40 wt.-%, and/or a reinforcing material, made of additively manufactured structures having an incorporated orientation, to form a composite structure.

2. Synthetic thrombus model (5) according to claim 1, **characterized in that** the elastically deformable main material is formed by a gelled agarose base or a silicone rubber base.

3. Synthetic thrombus model (5) according to claim 2, **characterized in that** the gelled agarose base is prepared with a 2% to 5% concentration.

4. Synthetic thrombus model (5) according to any one of claims 1 to 3, **characterized in that** the adhesive is a chloromethylisothiazolinone (CMIT) and/or a mixture with methylisothiazolinone (MIT).

5. Synthetic thrombus model (5) according to claim 4, **characterized in that** an agarose thrombus is formed with 2 to 3% concentration and 5-20 wt% adhesive of CMIT + MIT.

6. Synthetic thrombus model (5) according to claim 4, **characterized in that** a silicone rubber thrombus is formed with a silicone base portion of silicone ShA 0 of 30 to 35 wt% and with 30-40 wt% addition of adhesive such as CMIT + MIT.

7. Synthetic thrombus model (5) according to claim 5 or 6, **characterized in that** the mixing ratio of CMIT to MIT is 3 : 1.

8. Synthetic thrombus model (5) according to any one of claims 1 to 7, **characterized in that** the reinforcing material is formed as a support structure.

9. Synthetic thrombus model (5) according to claim 8, **characterized in that** the support structure is formed as a spiral structure (10), wave structure (11) or spike-like structure (13), the respective longitudinal extension of which follows the longitudinal extension of the elongated base body.

10. Synthetic thrombus model (5) according to any one of claims 7 to 9, **characterized in that** the support structure comprises micro glass beads.

11. Synthetic thrombus model (5) according to any one of claims 7 to 10, **characterized in that** the support structure provides an addition of 10 to 40% by weight.

12. Synthetic thrombus model (5) according to any one of claims 1 to 11, **characterized in that** the elongated base body has reduced surface adhesion behaviour due to temporary storage in a vegetable edible oil.

13. Synthetic thrombus model (5) according to any one of claims 1 to 12, **characterized in that** the shaping has been carried out according to a casting process or an injection process.

14. Use of the synthetic thrombus model (5) according to any one of claims 1 to 13 in a training model by means of a catheter-based clinic testing procedure of stroke scenarios, comprising at least one relevant vascular tree (1) having a blood circulation replacement system (2) with a delivery system (4), comprising at least one training region (3), and being connectable to an anatomically replicated blood circulation replacement system (2).

15. Use of the synthetic thrombus model (5) according to claim 14, **characterized in that** a mechanical thrombectomy with stent retrievers is provided for trapping and removing or aspirating the synthetic thrombus model.

16. Use of the synthetic thrombus model (5) according to claim 14 or 15, **characterized in that** the blood circulation replacement system (2) with the delivery system (4) is designed to simulate a human blood circulation system with respect to temperature and pressure of the fluid.

## Revendications

1. Modèle de thrombus synthétique (5) pour l'apprentissage de l'ablation chirurgicale d'un caillot sanguin d'un vaisseau sanguin par thrombectomie mécanique dans une simulation de divers scénarios d'accident vasculaire cérébral dans un modèle d'entraînement, qui simule une forme vivante avec une sensation réaliste d'un caillot sanguin humain en fournissant un corps de base allongé sur la base d'un matériau principal élastiquement déformable avec une dureté Shore A dans la plage de 0 à 10 et un additif pour simuler divers types de thrombus, **caractérisé en ce que** le profil des propriétés du corps de base peut être modifié au moins en ce qui concerne la dureté et la fragmentation, en fournissant une combinaison de matériaux du matériau principal avec au moins l'ajout d'un adhésif avec 5 à 40 % en poids ajouté en tant que composant stabilisant et/ou avec un matériau de renforcement composé de structures fabriquées de manière additive avec une orientation incorporée pour former une structure composite.

2. Modèle de thrombus synthétique (5) selon la revendication 1, **caractérisé en ce que** le matériau principal élastiquement déformable est formé à partir d'une base d'agarose gélifiée ou d'une base de caoutchouc silicone.

3. Modèle de thrombus synthétique (5) selon la revendication 2, **caractérisé en ce que** la base d'agarose gélifiée est préparée avec une concentration de 2 % à 5 %.

4. Modèle de thrombus synthétique (5) selon l'une des revendications 1 à 3, **caractérisé en ce que** l'adhésif est une chlorométhylisothiazolinone (CMIT) et/ou un mélange avec de la méthylisothiazolinone (MIT).

5. Modèle de thrombus synthétique (5) selon la revendication 4, **caractérisé en ce qu'**un thrombus d'agarose est formé avec une concentration de 2 à 3 % et de 5 à 20 % en poids d'adhésif CMIT + MIT.

6. Modèle de thrombus synthétique (5) selon la revendication 4, **caractérisé en ce qu'**un thrombus en caoutchouc silicone est formé avec une teneur de base en silicone de silicone ShA 0 de 30 à 35 % en poids et avec l'ajout d'un adhésif, tel que CMIT + MIT, de 30 à 40 % en poids.

7. Modèle de thrombus synthétique (5) selon la revendication 5 ou 6, **caractérisé en ce que** le rapport de mélange de CMIT sur MIT est de 3 : 1.

8. Modèle de thrombus synthétique (5) selon l'une des revendications 1 à 7, **caractérisé en ce que** le matériau de renforcement est conçu comme une structure d'appui.

9. Modèle de thrombus synthétique (5) selon la revendication 8, **caractérisé en ce que** la structure d'appui est conçue comme une structure en spirale (10), une structure ondulée (11) ou une structure en forme de pointe (13), dont l'extension longitudinale respective suit l'extension longitudinale du corps de base allongé.

10. Modèle de thrombus synthétique (5) selon l'une des revendications 7 à 9, **caractérisé en ce que** la structure d'appui comprend des microbilles de verre.

11. Modèle de thrombus synthétique (5) selon l'une des revendications 7 à 10, **caractérisé en ce que** la structure d'appui forme un ajout de 10 à 40 % en poids.

12. Modèle de thrombus synthétique (5) selon l'une des revendications 1 à 11, **caractérisé en ce que** le corps de base allongé présente un comportement d'adhérence de surface réduit du fait d'un stockage temporaire dans une huile comestible végétale.

13. Modèle de thrombus synthétique (5) selon l'une des revendications 1 à 12, **caractérisé en ce que** le façonnage est effectué par un processus de coulée ou un processus de moulage par injection.

14. Utilisation du modèle de thrombus synthétique (5) selon l'une des revendications 1 à 13 dans un modèle d'entraînement dans le cadre d'un réajustement thérapeutique à cathéter de scénarios d'accident vasculaire cérébral avec au moins un arbre vasculaire (1) correspondant avec un système de remplacement de circulation sanguine (2) avec un système transporteur (4) qui présente au moins une région d'entraînement (3) et peut être connecté à un système de remplacement de circulation sanguine (2) anatomiquement modélisé.

15. Utilisation du modèle de thrombus synthétique (5) selon la revendication 14, **caractérisée en ce qu'**il est prévu une thrombectomie mécanique avec des pinces à extractions de stents pour piéger et retirer ou aspirer le modèle de thrombus synthétique.

16. Utilisation du modèle de thrombus synthétique (5) selon la revendication 14 ou 15, **caractérisée en ce que** le système de remplacement de circulation sanguine (2) avec le système de distribution (4) est conçu pour simuler un système de circulation sanguine humaine en ce qui concerne la température et la pression du fluide.
